# Europäisches Patentamt
# European Patent Office
# Office européen des brevets

(19)

(11) Veröffentlichungsnummer : **0 054 226**
**B1**

(12) **EUROPÄISCHE PATENTSCHRIFT**

(45) Veröffentlichungstag der Patentschrift :
04.03.87

(51) Int. Cl.⁴ : **H 01 P  3/16**

(21) Anmeldenummer : 81110100.5

(22) Anmeldetag : 03.12.81

(54) **Wellenleiter und ein Verfahren zu dessen Herstellung.**

(30) Priorität : 16.12.80 DE 3047290

(43) Veröffentlichungstag der Anmeldung :
23.06.82 Patentblatt 82/25

(45) Bekanntmachung des Hinweises auf die Patenterteilung : 04.03.87 Patentblatt 87/10

(84) Benannte Vertragsstaaten :
AT CH DE FR GB IT LI NL

(56) Entgegenhaltungen :
EP-A- 0 021 712
EP-A- 0 032 390
GB-A- 2 012 983
US-A- 2 511 610
US-A- 4 106 847
US-A- 4 293 833
IEEE TRANSACTIONS ON MICROWAVE THEORY AND TECHNIQUES, Band MTT-28, Nr. 9, September 1980, Seiten 986-990, IEEE New York, U.S.A. E. YAMASHITA et al.: "Composite dielelectric waveguides"
IEEE JOURNAL OF QUANTUM ELECTRONICS, Band QE-17, Nr. 6, Juni 1981, Seiten 879-884 New York, U.S.A. T. OKOSHI: "Single-polarization single-mode optical fibers"
IEEE TRANSACTIONS ON MICROWAVE THEORY & TECHNIQUES, Band MTT-29, Nr. 9, September 1981, Seiten 987-990 New York, U.S.A. E. YAMASHITA et al.: "Composite dielectric waveguides with two elliptic-cylinder boundaries"

(73) Patentinhaber : **Licentia Patent-Verwaltungs-GmbH Theodor-Stern-Kai 1**
**D-6000 Frankfurt/Main 70 (DE)**

(72) Erfinder : **Huber, Hans-Peter, Dipl.-Phys.**
**Paul-Lincke-Strasse 24**
**D-7910 Neu-Ulm (DE)**
Erfinder : **Russer, Peter, Dr.**
**Haferweg 19**
**D-8000 Müchen 81 (DE)**

(74) Vertreter : **Schulze, Harald Rudolf, Dipl.-Ing. et al**
**Licentia Patent-Verwaltungs-GmbH Theodor-Stern-Kai 1**
**D-6000 Frankfurt/Main 70 (DE)**

**0 054 226**

**Beschreibung**

Wellenleiter zur polarisationserhaltenden Übertagung elektromagnetischer Strahlung und ein Verfahren zu dessen Herstellung.

Die Erfindung betrifft einen Wellenleiter zur polarisationserhaltenden Übertragung elektromagnetischer Wellen nach dem Oberbegriff des Patentanspruchs 1, insbesondere einen optischen Wellenleiter, und ein Verfahren zu dessen Herstellung nach dem Oberbegriff des Patentanspruchs 12.

Die Erfindung betrifft speziell einen stark doppelbrechenden dielektrischen Wellenleiter.

In rotationssymmetrischen dielektrischen Wellenleitern sind zwei Wellen mit zueinander orthogonaler Polarisation ausbreitungsfähig. Bei idealem kreissymmetrischem Querschnitt des Wellenleiters haben beide Wellen genau die gleiche Wellenzahl. Es treten daher keine Laufzeitdifferenzen zwischen den beiden Wellen auf. Bei technisch hergestellten Wellenleitern treten im allgemeinen Abweichungen vom idealen kreissymmetrischen Querschnitt auf, die z. B. durch Herstellungstoleranzen bedingt sind. Als Folge davon haben die beiden Wellen mit zueinander orthogonaler Polarisation unterschiedliche Ausbreitungsgeschwindigkeiten. Wegen des geringen Unterschiedes der Ausbreitungsgeschwindigkeiten ergeben sich laufend Überkopplungen zwischen beiden Wellen. Dadurch ergeben sich beispielsweise Störungen bei Nachrichtenübertragungen.

Diese Störungen sind insbesondere bei optischen Wellenleitern, sog. Lichtwellenleitern, dadurch vermeidbar, daß lediglich Licht eines bestimmten Polarisationszustandes übertragen wird.

Zur Übertragung von linear polarisiertem Licht ist es aus der EP-A 32 390, die gemäß Art 54 (3) (4) EPÜ für DE, FR, GB und NL zum Stand der Technik gehört, bekannt, bei einem Lichtwellenleiter den Kern und/oder den diesen umgebenden Mantel optisch anisotrop auszubilden durch entsprechende elliptische Querschnittsformen. Derartige dielektrische Wellenleiter mit elliptischem Querschnitt sind außerdem bekannt aus den Veröffentlichungen von D. Yeh « Elliptical Dielectric Waveguides », J. Appl. Phys., 33, No. 11, S. 3225-3243 (1962) sowie R. B. Dyott, J. R. Cozens, D. G. Merris « Preservation of Polarisation in Optical-Fibre Waveguides with Elliptical Cores », Electron. Lett., 15, No. 13, S. 380-382).

Aus der GB-A 20 12 983 ist es weiterhin bekannt, zunächst eine Vorform mit einem kreisförmigen Querschnitt herzustellen, dann diese Vorform mechanisch so zu bearbeiten, daß ein annähernd elliptischer Querschnitt entsteht, und dann aus einer derartigen Vorform einen Lichtwellenleiter zu ziehen, so daß dieser einen optisch anisotropen Querschnitt besitzt.

Aus der US-A 25 11 610 ist ein Wellenleiter zur Übertragung elektromagnetischer Wellen bekannt, der magnetisches und dielektrisches Material enthält. Diese Materialien sind in abwechselnden Schichten, z. B. ebenen Schichten, zu einer Schichtenfolge angeordnet, die eine Übertragung von linear polarisierter elektromagnetischer Strahlung ermöglicht.

Die Erfindung liegt die Aufgabe zugrunde, einen weiteren gattungsgemäßen Wellenleiter anzugeben, insbesondere zur Übertragung optischer Strahlung, bei dem eine Überkopplung zwischen orthogonal polarisierten Wellen weitestgehend verhindert ist, und ein Verfahren zur Herstellung eines derartigen Wellenleiters.

Diese Aufgabe wird erfindungsgemäß durch die in den kennzeichnenden Teilen der Ansprüche 1 und 12 angegebenen Merkmale gelöst.

Zweckmäßige Ausführungsformen sind in den abhängigen Ansprüchen 2 bis 10 bzw. 13 bis 16 zusammengestellt.

Ein Vorteil der Erfindung besteht darin, daß der Wellenleiter polarisationserhaltend ist für eingekoppelte Wellen.

Die Erfindung wird im folgenden anhand von Ausführungsbeispielen unter Bezugnahme auf die schematischen Zeichnungen näher erläutert. Es zeigen

Figur 1 bzw. Figur 2 schematische Darstellungen zur Erläuterung des Erfindungsgedankens.

Figur 3 bis Figur 5 Querschnitte, senkrecht zur Längsachse, von Ausführungsbeispielen von erfindungsgemäßen Wellenleitern.

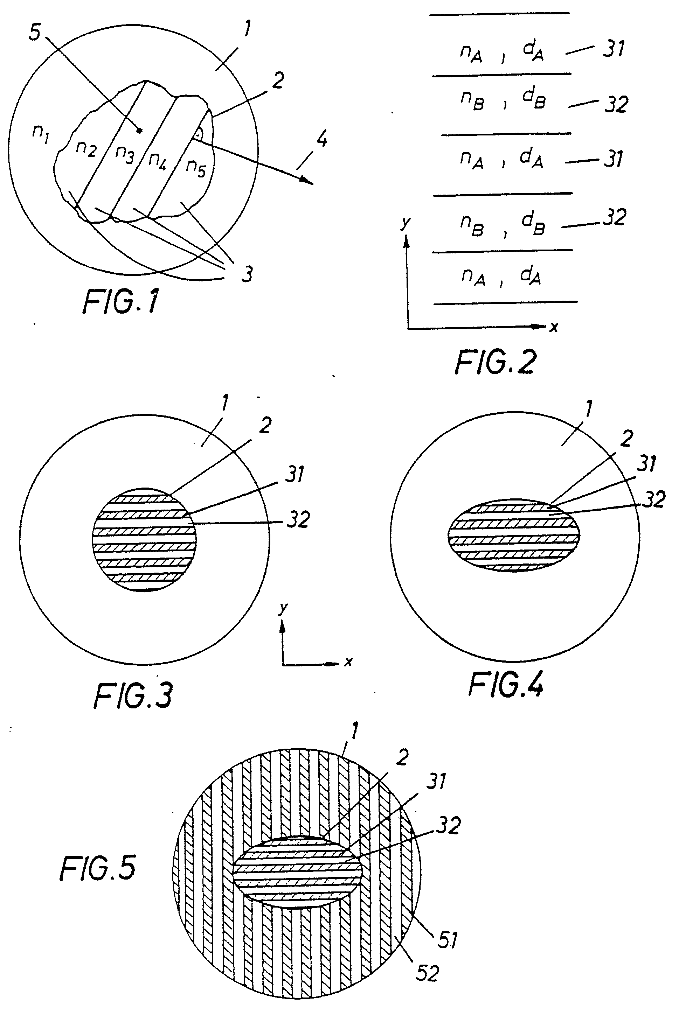

Fig. 1 zeigt schematisch einen Querschnitt, senkrecht zur Längsachse, eines erfindungsgemäßen dielektrischen Wellenleiters, der aus einem dielektrischen Mantel 1 und aus einem darin eingeschlossenen Kern 2 besteht. Der Kern 2 besteht aus einer Schichtenfolge, die aus mehreren Schichten 3 aufgebaut ist, die unterschiedliche Brechzahlen, beispielsweise $n_2$ bis $n_5$, besitzen. Die Schichten 3 sind im wesentlichen parallel aufeinander angeordnet, die Flächennormale 4 der Schichten 3 steht im wesentlichen senkrecht auf der Längsachse 5 des Wellenleiters. Ein derartiger Kern 2 ist elektrisch bzw. optisch anisotrop und hat eine Brechzahl, die abhängig ist von der Polarisationsrichtung einer in den Wellenleiter eingekoppelten elektrischen bzw. optischen Welle. Der Mantel 1 ist elektrisch bzw. optisch isotrop und hat die Brechzahl $n_1$.

Fig. 2 zeigt einen Ausschnitt aus einem Querschnitt eines weiteren erfindungsgemäßen Kerns 2. Die Schichtenfolge besteht aus einer Folge von zwei Schichten 31, 32, wobei abwechselnd jeweils eine Schicht 31, mit der Brechzahl $n_A$ und der Dicke $d_A$, auf einer Schicht 32, mit der Brechzahl $n_B$ und der Dicke $d_B$, angeordnet ist.

Sind die Dicken $d_A$, $d_B$ genügend klein gewählt, so daß sich das elektrische Feld der eingekoppelten Welle in einer Richtung y über eine Länge, entsprechend den Dicken $d_A$ bzw. $d_B$, lediglich geringfügig ändert, so ist eine derartige Vielschichtstruktur, genauso wie ein homogenes elektrisch bzw. optisch anisotropes Material, durch eine polarisationsrichtungsabhängige Brechzahl darstellbar. Dieser Fall ist z. B. dann gegeben, wenn der Wellenleiter lediglich den Grundmodus einer eingekoppelten Welle führt oder lediglich im Grundmodus angeregt ist oder, bei Anregung höherer Moden, die Ordnungsindizes der Moden klein sind gegen die Anzahl der Schichten 3. Die genannte Bedingung erleichtert in erster Linie die Erklärung der Erfindung, stellt jedoch keine prinzipielle Einschränkung für die Funktion der Erfindung dar.

Unter den genannten Voraussetzungen ist die Brechzahl $n_x$ für eine in Richtung x polarisierte elektromagnetische Welle durch die Formel

$$n_x = \sqrt{\frac{n_A^2\, d_A + n_B^2\, d_B}{d_A + d_B}}$$

gegeben. Die Brechzahl $n_y$ für die in Richtung y polarisierte Welle ist durch folgende Formel gegeben :

$$n_y = n_A \cdot n_B \sqrt{\frac{d_A + d_B}{n_A^2\, d_B + n_B^2\, d_A}}\,.$$

Sind die Brechzahlen $n_A$ und $n_B$ ungleich, so ist die Brechzahl $n_x$ immer größer als die Brechzahl $n_y$. Das Verhältnis $n_x/n_y$ hat für die Dicke $d_A = d_B$ einen maximalen Wert. Sofern herstellungstechnische Gründe es erlauben ist es daher vorteilhaft, gleiche Dicken $d_A$, $d_B$ zu wählen. Für $d_A = d_B$ gilt

$$\frac{n_x}{n_y} = \frac{1}{2}\left(\frac{n_A}{n_B} + \frac{n_B}{n_A}\right).$$

Die folgende Tabelle gibt den relativen Brechzahlunterschied $(n_x - n_y)/n_y$ als Funktion des relativen Brechzahlunterschiedes $(n_A - n_B)/n_A$ an :

| $(n_A - n_B)/n_B$ | $(n_x - n_y)/n_y$ |
|---|---|
| $10^{-4}$ | $5 \times 10^{-9}$ |
| $10^{-3}$ | $5 \times 10^{-7}$ |
| $10^{-2}$ | $4{,}95 \times 10^{-5}$ |
| $10^{-1}$ | $4{,}54 \times 10^{-3}$ |

Fig. 3 zeigt einen erfindungsgemäßen Wellenleiter mit im wesentlichen kreisförmigem Querschnitt. Der Mantel 1 ist im wesentlichen elektrisch bzw. optisch isotrop. Der elektrisch bzw. optisch anisotrope Kern 2 besteht aus Schichten 31, 32 die unterschiedliche Brechzahlen $n_A$, $n_B$ (gemäß der Tabelle) und gleiche Dicken $d_A$, $d_B$ besitzen. Eine in Richtung x bzw. Richtung y polarisierte Welle weist einen Phasenkoeffizienten $\beta_x$ bzw. $\beta_y$ auf, wobei als Phasenkoeffizient das Verhältnis (Phasendrehung der Welle)/(Längeneinheit des Wellenleiters) bezeichnet ist. Das Verhältnis $(\beta_x - \beta_y)/\beta_y$ ist für einen bestimmten Modus der eingekoppelten Welle durch

$$\frac{\beta_x - \beta_y}{\beta_y} = k\,\frac{n_x - n_y}{n_y}$$

gegeben, wobei die Konstante k zwischen 0 und 1 liegt und um so größer ist, je stärker die Welle vom Kern 2 geführt wird.

Die Erfindung erweist sich als besonders vorteilhaft, wenn der Wellenleiter derart ausgebildet ist, daß er lediglich den Grundmodus der eingekoppelten Welle vom Typ $HE_{11}$ fortleitet. Dieser Modus wird z. B. in der Druckschrift « Wissenschaftliche Berichte AEG-Telefunken, Bd. *44* (1971), S. 64-70 von O. Krumpholz, beschrieben. Von besonderem Interesse ist die Erfindung auch, wenn der Wellenleiter als optischer Wellenleiter auch Lichtleitfaser genannt, ausgebildet ist. Der in Richtung x polarisierte $HE_{11}$-Modus hat dann einen um $k\,n_x/n_y$ höheren Phasenkoeffizienten als der in Richtung y polarisierte Modus. Mit $(n_A - n_B)/n_A = 10^{-2}$ und $k = 1/2$ folgt $(\beta_x - \beta_y)/\beta_y = 2{,}5 \times 10^{-5}$. Bei einer Wellenlänge von 0.85 μm der eingekoppelten Welle und einer Brechzahl von $n_A = 1{,}5$ entspricht das einem optischen Weglängenunterschied von einer Wellenlänge nach einem Wellenleiterabschnitt von 23 mm.

Bekanntlich sind unterschiedliche Phasenkoeffizienten $\beta_x$ und $\beta_y$ z. B. dadurch herstellbar, daß der Kern 2 des Wellenleiters nicht rotationssymmetrisch ausgebildet ist. Wird der Kern 2 z. B. mit einem elliptischen Querschnitt ausgebildet, so hat die in Richtung der Hauptachse der Ellipse polarisierte $oHE_{11}$-Welle einen höheren Phasenkoeffizienten als die in Richtung der Nebenachse der Ellipse polarisierte $eHE_{11}$-Welle.

Fig. 4 zeigt eine vorteilhafte Weiterbildung der Erfindung, bei der ein im wesentlichen elliptischer Querschnitt des Kerns 2 mit der Mehrschichtstruktur des Kernes gemäß Fig. 3 kombiniert ist. Sowohl die Elliptizität des Kernes als auch die Mehrschichtstruktur bewirken ein unterschiedliches $\beta_x$ und $\beta_y$. Mit beiden Maßnahmen ist ein Effekt in der gleichen Größenordnung erzielbar. Durch Kombination bei der Maßnahmen tritt Addition der Effekte auf wenn die Schichten 31, 32 der Mehrschichtstruktur im wesentlichen parallel zur Hauptachse der Ellipse liegen.

Es sind noch eine Vielzahl von anderen Querschnittsformen des Kernes möglich, beispielsweise ein Kern mit rechteckigem Querschnitt. Zur Erzielung einer möglichst großen Aufspaltung der Werte $\beta_x$ und $\beta_y$ ist es in allen Fällen nötig, daß die Richtung der größten Ausdehnung des Querschnittes des Kernes im wesentlichen parallel ist zu den Schichtebenen der Mehrschichtstruktur.

Fig. 5 zeigt ein weiteres Ausführungsbeispiel der Erfindung. Bei dem dargestellten schematischen Querschnitt eines Wellenleiters sind Mantel 1 und Kern 2 elektrisch bzw. optisch anisotrop. Dies wird beispielsweise dadurch erreicht, daß Mantel 1 und Kern 2 jeweils aus Schichtenfolgen bestehen, deren einzelne Schichten unterschiedliche Brechzahlen besitzen. Weiterhin ist es möglich, wie auch in Fig. 4 dargestellt, den Kern 2 mit einem Querschnitt zu versehen, der von der Kreisform abweicht. In Fig. 5 ist der im wesentlichen ellipsenförmige Kern 2 aus Schichten 31, 32 zusammengesetzt. Der elektrisch bzw. optisch anisotrope Mantel 1 ist ebenfalls aus Schichten 51, 52 zusammengesetzt, die untereinander unterschiedliche Brechzahlen aufweisen. Bei einer derartigen Anordnung ist es vorteilhaft, daß die Schichten 31, 32 des Kerns 2 im wesentlichen senkrecht stehen auf den Schichten 51, 52 des Mantels 1. Andere Ausführungsformen mit beliebigem Querschnitt des Kerns 2 sind möglich.

In nicht dargestellten weiteren Ausführungsformen ist der Mantel elektrisch bzw. optisch anisotrop während der Kern aus elektrisch bzw. optisch isotropem Material besteht. Der Querschnitt des Kerns hat eine beliebige Form.

Ein Verfahren zur Herstellung derartiger Wellenleiter, insbesondere optischer Wellenleiter, benutzt im wesentlichen das sogenante Stab-Rohr-Verfahren. Dabei wird im allgemeinen ein (Glas-) Stab konzentrisch in einem (Glas-) Rohr angeordnet und diese Anordnung mittels Wärmeeinwirkung zu einem optischen Wellenleiter, auch Lichtleitfaser genannt, ausgezogen. Wird bei einer derartigen Anordnung der Stab und/oder das Rohr mit einer Schichtstruktur versehen, so sind erfindungsgemäße Wellenleiter herstellbar. Die Schichtstruktur besteht im wesentlichen aus übereinander angeordneten Schichten in einer Form, die derjenigen der herzustellenden Wellenleiter ähnlich ist.

Im folgenden werden beispielhaft Verfahren zur Herstellung des Stabes genannt :

a) Auf ein streifenförmiges Trägermaterial, z. B. Glas, werden glasartige bzw. glasbildende Schichten aufgebracht, z. B. pyrolytisch.

b) Auf die Innenfläche eines Trägerrohres, z. B. Glasrohr, werden mehrere glasförmige bzw. glasbildende Schichten aufgebracht, z. B. pyrolytisch. Anschließend wird das Trägerrohr, im wesentlichen parallel zu seiner Längsachse, derart zerteilt, z. B. gesägt und/oder geätzt, daß ein oder mehrere Stäbe entstehen, deren Querschnitt eine Schichtstruktur aufweist.

c) Ein auf seiner Innenfläche mit ein oder mehreren Schichten versehenes Trägerrohr wird, z. B. unter Wärmeeinwirkung, derart senkrecht zu seiner Längsachse kollabiert, daß ein streifenförmiger Stab entsteht, dessen Querschnitt die gewünschte Schichtstruktur aufweist.

Ein beispielhaftes Verfahren zur Herstellung des Rohres besteht darin, daß in einen aus im wesentlichen parallelen (Glas-) Schichten aufgebauten Körper ein Loch gebohrt wird, dessen Achse im wesentlichen parallel zu den Schichtebenen ist und dessen Durchmesser größer ist als der größte Durchmesser des verwendeten Stabes.

**Patentansprüche**

1. Wellenleiter zur polarisationserhaltenden Übertragung elektromagnetischer Wellen, bestehend aus einem zylinderförmigen dielektrischen Kern und einem diesen umhüllenden dielektrischen Mantel, bei welchem der Kern und/oder der Mantel in einer Querschnittsebene senkrecht zur Achsenrichtung des Wellenleiters eine Anisotropie aufweisen, dadurch gekennzeichnet, daß der Kern (2) und/oder der Mantel (1) aus einer Schichtenfolge ebener, elektrisch bzw. optisch isotroper und/oder elektrisch bzw. optisch anisotroper Schichten (3 ; 31, 32, 51, 52) bestehen,
die in mehreren Richtungen unterschiedliche Brechzahlen ($n_2$-$n_5$ ; $n_A$, $n_B$) besitzen,
deren Anzahl wesentlich größer ist als die Ordnungsindizes des Schwingungsmodus der eingekoppelten Welle,
deren Flächennormale (4) im wesentlichen senkrecht stehen zu einer die Längsachse (5) enthaltenden Ebene, und
deren Dicke ($d_A$, $d_B$) in Richtung der Flächennormalen (4) derart gewählt ist, daß die ortsabhängige Änderung des elektrischen Feldes der eingekoppelten Welle vernachlässigbar ist auf einer Länge, welche der Dicke entspricht.

2. Wellenleiter nach Anspruch 1, dadurch gekennzeichnet, daß die Schichtenfolge aus einer Folge zweier Arten abwechselnd angeordneter, ebener Schichten (31, 32) unterschiedlicher Brechzahl $n_A$, $n_B$ (31, 32) besteht, die jeweils im wesentlichen elektrisch bzw. optisch isotrop sind und die im wesentlichen eine gleiche Dicke ($d_A$) aufweisen.

3. Wellenleiter nach Anspruch 1 oder 2, dadurch gekennzeichnet, daß eine Schichtenfolge den elektrisch bzw. optisch anisotropen Kern (2) bildet, der von einem im wesentlichen elektrisch bzw. optisch isotropen Mantel (1) umhüllt ist.

4. Wellenleiter nach Anspruch 1 oder 2, dadurch gekennzeichnet, daß eine Schichtenfolge den elektrisch bzw. optisch anisotropen Mantel (1) bildet, der den elektrisch bzw. optisch isotropen Kern (2) umhüllt.

5. Wellenleiter nach Anspruch 3 oder 4, dadurch gekennzeichnet, daß der Kern (2) senkrecht zur Achsenrichtung (5) des Wellenleiters einen Querschnitt aufweist, der im wesentlichen kreisförmig ist.

6. Wellenleiter nach Anspruch 1 oder 2, dadurch gekennzeichnet, daß eine erste Schichtenfolge einen elektrisch bzw. optisch anisotropen Kern (2) bildet, und daß eine zweite Schichtenfolge einen elektrisch bzw. optisch anisotropen Mantel (1) bildet.

7. Wellenleiter nach Anspruch 6, dadurch gekennzeichnet, daß die erste Schichtenfolge eine Flächennormale hat, die im wesentlichen senkrecht steht auf der Flächennormalen der zweiten Schichtenfolge.

8. Wellenleiter nach einem der Ansprüche 3, 4, 6 und 7, dadurch gekennzeichnet, daß ein aus einer ersten Schichtenfolge bestehender Kern (2) einen Querschnitt hat, der in Richtung der Schichtenebenen eine größere Ausdehnung hat als in einer dazu senkrechten Richtung und/oder daß bei einem aus einer zweiten Schichtenfolge bestehenden Mantel (1) der Kern (2) einen Querschnitt hat, der in einer Richtung, die im wesentlichen parallel ist zur Flächennormalen der zweiten Schichtenfolge, eine größere Ausdehnung besitzt als in einer dazu senkrechten Richtung.

9. Wellenleiter nach Anspruch 8, dadurch gekennzeichnet, daß der Kern (2) einen im wesentlichen ellipsenförmigen Querschnitt hat.

10. Wellenleiter Anspruch 8, dadurch gekennzeichnet, daß der Kern (2) einen im wesentlichen rechteckförmigen Querschnitt hat.

11. Wellenleiter nach einem der vorhergehenden Ansprüche, dadurch gekennzeichnet, daß der Wellenleiter ein optischer Wellenleiter ist.

12. Verfahren zur Herstellung eines optischen Wellenleiters zur polarisationserhaltenden Übertragung elektromagnetischer Wellen, nach Anspruch 11, bestehend aus einem zylinderförmigen dielektrischen Kern und einem diesen umhüllenden dielektrischen Mantel, bei welchem der Kern und/oder der Mantel in einer Querschnittsebene senkrecht zur Achsenrichtung des Wellenleiters eine Anisotropie aufweisen, dadurch gekennzeichnet, daß ein Stab in einem Rohr angeordnet wird, wobei der Stab und/oder das Rohr aus mehreren Schichten bestehen, die in einer Richtung im wesentlichen parallel sind zur Stab- bzw. Rohrachse, und daß eine derartige Anordnung zu dem optischen Wellenleiter ausgezogen wird, derart, daß der Stab den Kern und das Rohr den Mantel des optischen Wellenleiters bilden, wobei der Kern (2) und/oder der Mantel (1) aus einer Schichtenfolge ebener, elektrisch bzw. optisch isotroper und/oder elektrisch bzw. optisch anisotroper Schichten (3 ; 31, 32, 51, 52) bestehen,

die in mehreren Richtungen unterschiedliche Brechzahlen $n_2$-$n_5$ ; $n_A$, $n_B$ besitzen,

deren Anzahl wesentlich größer ist als die Ordnungsindizes des Schwingungsmodus der eingekoppelten Welle,

deren Flächennormale (4) im wesentlichen senkrecht stehen zur einer die Längsachse (5) enthaltenden Ebene, und

deren Dicke ($d_A$, $d_B$) in Richtung der Flächennormalen (4) derart gewählt ist, daß die ortsabhängige Änderung des elektrischen Feldes der eingekoppelten Welle vernachlässigbar ist auf einer Länge, welche der Dicke entspricht.

13. Verfahren zur Herstellung eines Wellenleiters nach Anspruch 12, dadurch gekennzeichnet, daß der Stab und/oder das Rohr im wesentlichen aus einem glasartigen und/oder einem glasbildenden Material bestehen.

14. Verfahren zur Herstellung eines Wellenleiters nach Anspruch 12 oder Anspruch 13, dadurch gekennzeichnet, daß der Stab aus einem streifenförmigen Trägermaterial hergestellt wird, auf das mehrere Schichten aufgebracht werden.

15. Verfahren zur Herstellung eines Wellenleiters nach Anspruch 12 oder 13, dadurch gekennzeichnet, daß der Stab aus einem auf der Innenfläche mit mindestens einer Schicht beschichteten Trägerrohr hergestellt wird, das nach der Beschichtung zu einem zylindersymmetrischen Körper kollabiert wird derart, daß der Stab im wesentlichen einen kreisförmigen oder ellipsenförmigen oder rechteckförmigen Querschnitt aufweist.

16. Verfahren zur Herstellung eines Wellenleiters nach einem der Ansprüche 12 bis 15, dadurch gekennzeichnet, daß aus einem Körper, der im wesentlichen aus parallelen Schichten besteht, ein Rohr hergestellt wird derart, daß die Schichten im wesentlichen parallel werden zur Achse des Rohrs.

**Claims**

5

1. Waveguide for the polarising transmission of electrical waves and consisting of a cylindrical dielectric core and a dielectric shell enveloping this, in which the core and/or the shell display an anisotropy in a cross-sectional plane perpendicular to the axial direction of the waveguide, characterised thereby, that the core (2) and/or the shell (1) consist of a sequence of layers of planar, electrically or optically isotropic and/or electrically or optically anisotropic layers (3 ; 31, 32, 51, 52),

which possess different refractive indices ($n_2$ to $n_5$ ; $n_A$, $n_B$) in several directions,

the number of which is substantially greater than the ordinal index of the mode of oscillation of the coupled-in wave,

the surface normals (4) of which stand substantially perpendicular to a plane containing the longitudinal axis (5) and

the thickness ($d_A$, $d_B$) of which in direction of the surface normal (4) is chosen in such a manner that the location-dependent variation in the electric field of the coupled-in wave is negligible over a length which corresponds to the thickness.

2. Waveguide according to claim 1, characterised thereby, that the sequence of layers consists of a sequence of two kinds of alternately arranged, planar layers (31, 32) of different refractive index ($n_A$, $n_B$), which are each substantially isotropic electrically or optically and display a substantially equal thickness ($d_A$).

3. Waveguide according to claim 1 or 2, characterised thereby, that one layer sequence forms the electrically or optically anisotropic core (2), which is enveloped by an electrically or optically substantially isotropic shell (1).

4. Waveguide according to claim 1 or 2, characterised thereby, that one layer sequence forms the electrically or optically anisotropic shell (1), which envelops the electrically or optically isotropic core (2).

5. Waveguide according to claim 3 or 4, characterised thereby, that the core (2) perpendicularly to the axial direction (5) of the waveguide displays a cross-section which is substantially circular.

6. Waveguide according to claim 1 or 2, characterised thereby, that a first layer sequence forms an electrically or optically anisotropic core (2) and that a second layer sequence forms an electrically or optically anisotropic shell (1).

7. Waveguide according to claim 6, characterised thereby, that the first layer sequence has a surface normal which stands substantially perpendicular to the surface normal of the second layer sequence.

8. Waveguide according to one of the claims 3, 4, 6 and 7, characterised thereby, that a core (2) consisting of a first layer sequence has a cross-section which has a greater extent in direction of the layer planes than in a direction perpendicular thereto and/or that in the case of a shell (1) consisting of a second layer sequence, the core (2) has a cross-section which possesses a greater extent in one direction, which is substantially parallel to the surface normal of the second layer sequence, than in a direction perpendicular thereto.

9. Waveguide according to claim 8, characterised thereby, that the core (2) has a substantially elliptical cross-section.

10. Waveguide according to claim 8, characterised thereby, that the core (2) has a substantially rectangular cross-section.

11. Waveguide according to one of the preceding claims, characterised thereby, that the waveguide is an optical waveguide.

12. Method for the production of an optical waveguide, for the polarising transmission of electrical waves, according to claim 11 and consisting of a cylindrical dielectric core and a dielectric shell enveloping this, in which the core and/or the shell display an anisotropy in a cross-sectional plane perpendicular to the axial direction of the waveguide, characterised thereby, that a rod is arranged in a tube, wherein the rod and/or the tube consist of several layers which in one direction are substantially parallel to the axis of the rod and/or the tube and that such an arrangement is drawn out to form the optical waveguide in such a manner that the rod forms the core and the tube forms the shell of the optical waveguide, wherein the core (2) and/or the shell (1) consist of a sequence of layers of planar, electrically or optically isotropic and/or electrically or optically anisotropic layers (3 ; 31, 32, 51, 52),

which possess different refractive indices ($n_2$ to $n_5$ ; $n_A$, $n_B$) in several directions,

the number of which is substantially greater than the ordinal index of the mode of oscillation of the coupled-in wave,

the surface normals (4) of which stand substantially perpendicular to a plane containing the longitudinal axis (5) and

the thickness ($d_A$, $d_B$) of which in direction of the surface normal (4) is chosen in such a manner that the location-dependent variation in the electric field of the coupled-in wave is negligible over a length which corresponds to the thickness.

13. Method for the production of a waveguide according to claim 12, characterised thereby, that the rod and/or the tube consist substantially of a glass-like and/or a glass-forming material.

14. Method for the production of a waveguide according to claim 12 or claim 13, characterised thereby, that the rod is produced form a strip-shaped carrier material, onto which several layers are applied.

15. Method for the production of a waveguide according to claim 12 or 13, characterised thereby, that the rod is produced form a carrier tube, which coated on the inside with at least one layer and which after the coating is collapsed in such a manner that the rod displays a substantially circular or elliptical or rectangular cross-section.

16. Method for the production of a waveguide according to one of the claims 12 to 15, characterised thereby, that a tube is produced in such a manner from a body, which consists substantially of parallel layers, that the layers become substantially parallel to the axis of the tube.

## Revendications

1. Guide d'ondes pour la transmission avec conservation de la polarisation d'ondes électromagnétiques, constitué par un cœur diélectrique cylindrique entouré d'une gaine diélectrique, et dans lequel le cœur et/ou la gaine présentent une anisotropie dans un plan de coupe perpendiculaire à son grand axe ; ledit guide d'ondes étant caractérisé en ce que le cœur (2) et/ou la gaine (1) sont constitués par une succession de couches planes, électriquement et optiquement isotropes et/ou électriquement et optiquement anisotropes (3 ; 31, 32, 51, 52),

qui présentent des indices de réfraction différents ($n_2$-$n_5$ ; $n_A$, $n_B$) suivant plusieurs directions,

dont le nombre est nettement supérieur aux ordres du mode de l'onde injectée,

dont la normale (4) est sensiblement perpendiculaire à un plan contenant l'axe longitudinal (5), et

dont l'épaisseur ($d_A$, $d_B$) suivant la normale (4) est choisie de façon que la variation locale du champ électrique de l'onde injectée soit négligeable sur une longueur égale à l'épaisseur.

2. Guide d'ondes selon revendication 1, caractérisé par une suite de deux types de couches planes (31, 32) à indice de réfraction différent $n_A$, $n_B$, sensiblement isotropes électriquement et optiquement et présentant sensiblement la même épaisseur ($d_A$).

3. Guide d'ondes selon une des revendications 1 ou 2, caractérisé en ce qu'une suite de couches constitue le noyau (2) anisotrope électriquement et optiquement et entouré par une gaine (1) sensiblement isotrope électriquement et optiquement.

4. Guide d'ondes selon une des revendications 1 ou 2, caractérisé en ce qu'une suite de couches constitue la gaine (1) anisotrope électriquement et optiquement, qui entoure le cœur (2) isotrope électriquement et optiquement.

5. Guide d'ondes selon une des revendications 3 ou 4, caractérisé en ce que la section du cœur (2) perpendiculaire à l'axe (5) du guide d'ondes est sensiblement circulaire.

6. Guide d'ondes selon une des revendications 1 ou 2, caractérisé en ce qu'une première suite de couches constitue un cœur (2) anisotrope électriquement et optiquement ; et une seconde suite de couches constitue une gaine (1) anisotrope électriquement et optiquement.

7. Guide d'ondes selon revendication 6, caractérisé en ce que la normale à la première suite de couches est sensiblement perpendiculaire à la normale à la seconde suite de couches.

8. Guide d'ondes selon une quelconque des revendications 3, 4, 6 et 7, caractérisé en ce que la section d'un cœur (2) constitué par une première suite de couches présente suivant la direction des plans des couches une dimension supérieure à celle suivant une direction perpendiculaire à la précédente et/ou, dans le cas d'une gaine (1) constituée par une seconde suite de couches, la section du cœur (2) présente suivant une direction sensiblement parallèle à la normale à la seconde suite de couches une dimension supérieure à celle suivant la direction perpendiculaire à la précédente.

9. Guide d'ondes selon revendication 8, caractérisé en ce que la section du cœur (2) est sensiblement elliptique.

10. Guide d'ondes selon revendication 8, caractérisé en ce que la section du cœur (2) est sensiblement rectangulaire.

11. Guide d'ondes selon une quelconque des revendications 1 à 10, caractérisé en ce que le guide d'ondes est un guide optique.

12. Procédé de production d'un guide optique pour la transmission avec conservation de la polarisation d'ondes électromagnétiques selon revendication 11, constitué par un cœur diélectrique cylindrique entouré par une gaine diélectrique et dans lequel le cœur et/ou la gaine présentent une anisotropie dans un plan de coupe perpendiculaire à son axe, ledit procédé étant caractérisé en ce qu'un barreau est disposé dans un tube, le barreau et/ou le tube étant considérés par plusieurs couches qui, suivant une direction, sont sensiblement parallèles à l'axe du barreau ou du tube ; et un tel ensemble est étiré pour former le guide optique de façon que le barreau constitue le cœur et le tube constitue la gaine du guide optique, le cœur (2) et/ou la gaine (1) étant constitués par une suite de couches planes isotropes électriquement et optiquement et/ou anisotropes électriquement ou optiquement (3 ; 31, 32, 51, 52),

qui présentent des indices de réfraction différents ($n_2$-$n_5$ ; $n_A$, $n_B$) suivant plusieurs directions,

dont le nombre est nettement supérieur aux ordres du mode de l'onde injectée,

dont la normale (4) est sensiblement perpendiculaire à un plan contenant le grand axe (5), et

dont l'épaisseur ($d_A$, $d_B$) suivant la direction de la normale (4) est choisie de façon que la variation locale du champ électrique de l'onde injectée soit négligeable sur une longueur égale à l'épaisseur.

13. Procédé de production d'un guide d'ondes selon revendication 12, caractérisé en ce que le barreau et/ou le tube sont constitués pour l'essentiel par un matériau vitreux et/ou un matériau vitrifiable.

14. Procédé de production d'un guide d'ondes selon une des revendications 12 ou 13, caractérisé en

7

ce que le barreau est produit à partir d'un matériau support en forme de ruban, portant plusieurs couches.

15. Procédé de production d'un guide d'ondes selon une des revendications 12 ou 13, caractérisé en ce que le barreau est produit à partir d'un tube support, dont la face intérieure porte une couche au moins et qui, après le dépôt, est rétreint pour former un corps cylindrique symétrique, de façon que le barreau présente une section sensiblement circulaire, elliptique ou rectangulaire.

16. Procédé de production d'un guide d'ondes selon une quelconque des revendications 12 à 15, caractérisé en ce qu'un tube est produit à partir d'un corps constitué essentiellement par des couches parallèles, de façon que les couches soient sensiblement parallèles à l'axe du tube.

FIG.1

FIG.2

FIG.3

FIG.4

FIG.5